(19) Europäisches Patentamt
European Patent Office
Office européen des brevets

(11) **EP 4 338 565 A1**

(12) **EUROPEAN PATENT APPLICATION**

(43) Date of publication:
**20.03.2024 Bulletin 2024/12**

(21) Application number: **22195604.8**

(22) Date of filing: **14.09.2022**

(51) International Patent Classification (IPC):
**A01C 21/00** $^{(2006.01)}$      **G06Q 50/02** $^{(2024.01)}$

(52) Cooperative Patent Classification (CPC):
**A01C 21/007; G06Q 50/02**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Yara International ASA**
**0277 Oslo (NO)**

(72) Inventor: **PORTZ, Gustavo**
**48249 Dülmen (DE)**

(74) Representative: **AWA Sweden AB**
**P.O. Box 11394**
**404 28 Göteborg (SE)**

(54) **METHOD AND SYSTEM FOR DETERMINING A MEASUREMENT REGION**

(57) System and method for determining at least one first measurement region for carrying out at least one measurement with a crop nutrient measurement device for providing a fertilizer recommendation based on position dependent yield data. Different embodiments for determination of the measurement regions regarding specific locations and field conditions are disclosed.

FIG. 4A

EP 4 338 565 A1

## Description

## Technical field

The present disclosure relates to a system and method for determining at least one measurement region for carrying out at least one measurement with a crop nutrition status for providing a fertilizer recommendation..

## Background

Determining the appropriate amount of fertilizer a crop needs is one of the most challenging and important decisions a farmer will encounter. A deficit in nitrogen will mainly reduce crop yield and quality, while an excess will produce economic losses and damage the environment among others. A deficit in other nutrients will also lead to crop nutrition issues, resulting on crop defects, lower yield and reduced crop quality. Crops, however, present an in-field variability due to the variance in parameters which influence the growth and development of a crop (water, soil properties, ...) and is therefore cumbersome to establish a fertilizer recommendation which might suit the whole crop at optimum levels.

Handheld devices for direct measurement of crop nitrogen levels are well known in the prior art. Some of these devices usually determine the chlorophyll (directly related to nitrogen content) by means of optical measurements. Other multi-nutrient sensors are not only able of sensing chlorophyll or nitrogen in plants, but may as well detect other nutrients like Mg, P, K and so on, in both plants and soil. However, these devices can only determine the nutrient status of a single plant or measurement location each time, therefore rendering the determination of the infield spatial variability and consequently the variable rate application of fertilizers difficult. While there are several approaches for non-direct determination of the infield variability of nitrogen content in plants (N-Sensor®, Greenseeker®), wherein the sensing devices are integrated in agricultural machines which can be carried out continuously over the field, reaching a full determination of the crop status over the whole field. However, these solutions are expensive and therefore not widely available for the average farmer. Hence a low-cost approach is needed which enables local sensing by means of handheld devices which takes into account the variable crop nutrition status over a whole field.

## Prior Art

US 7,746,452 B2 shows a device for measuring a plant chlorophyll, nitrogen and water levels, comprising a PDA which allows the determination of the measurement location. However, the approach in US 7,746,452 B2 merely registers and displays the location data to the user to spot differences in results (e.g. for a shaded hillside).

US 10,175,215 B2 discloses a different detecting device but a similar approach regarding the usage of GPS data. It merely highlights the advantages for spatio-temporal mapping, tracking and analysis of the results for further processing after the measurements have been carried out.

Several other devices like the SPAD 502 meter (produced by Konica Minolta) or the N-Tester® of Yara International ASA have been successfully used for nitrogen recommendations. The SPAD is a portable measuring device for chlorophyll content of leaves. SPAD-502 determines the relative amount of chlorophyll present by measuring the absorbance of the leaf in two wavelength regions using two LED (light emitting diode) elements and one silicone photodiode. Further multi-nutrient sensing devices based on different technologies like Laser Induced Breakdown Spectroscopy (LIBS) are known, see for example US 2007/0218556 A1, wherein said multi-nutrient sensing devices are able of detecting not only plant nutrients but as well soil nutrients.

## Summary

The prior art forces the users or farmers to take a big number of measurements in order to cover differences within the agricultural field and get a reliable representation of the field average in a time and labor intensive manner. On the other hand, if the user or farmer does not have the time to carry out all those measurements needed to ensure that the result is representative of the true crop nutrient content despite the possible in-field variability, this can cause the discussed systems to only provide a local measurement which can be representative of a single plant or location in the field, but not of the whole field. Moreover, no further consideration of underlying factors present in agricultural fields contributing to in-field variability is taken. In worst case scenario, if only a few measurements could be provided, and the location where the measurements were taken at has a crop nitrogen content far away from the average crop nutrient content or representative spots of the rest of the crop and field, a wrong nutrient recommendation will be produced for the whole crop, therefore causing yield and economical losses, and possible damages to the environment. Moreover, none of the cited documents consider the use of position dependent yield data in order to adequately scan the field and generate herewith a fertilizer recommendation adapted to it.

Usual approaches would turn a specific area of the agricultural field into N-rich bands or sectors by overfertilizing said specific area. This area would then represent the maximum growth when no nutrient deficiency is present. Achieving this requires however voluntary waste of fertilizer in order to overfertilize the specific area. Further, the area designated as said specific area might have other issues which condition the crop growth which can go unaccounted for (e.g. soil issues contributing to determining the specific yield) by a mere random selection of said specific areas.

Moreover, while said specific areas are convenient for agricultural machinery able of scanning a whole field of a certain dimensions, average farmers usually lack said agricultural machinery and therefore a more flexible approach is required which conveniently selects a plurality of measurement regions within the agricultural field which best match the user's needs and avoids the waste of fertilizer. Further, aiming for a directed measurement of the crop nutrient content, the need of calibration for different crops and locations is eliminated.

The current disclosure aims at providing solutions for the problems which the use of such handheld crop nutrient measurements device entail. While direct readings offer the advantage of precision, it is cumbersome to determine a reliable representation of the crop status of an entire agricultural field, since it would involve a great amount of measuring points inside the field.

According to a first aspect of the present disclosure, this and other objectives are achieved by a computer-implemented method for determining at least one measurement region for carrying out at least one measurement with a crop nutrient measurement device in said measurement region for providing a fertilizer recommendation to a crop, comprising the steps of determining an agricultural field or a part thereof, wherein the agricultural field comprises the crop for which the recommendation is intended; receiving position dependent yield data of the agricultural field, wherein the position dependent yield data comprises yield data from at least one prior crop season and determining the at least one measurement region based on the position dependent yield.

Following this approach, the measurement regions determined can be adapted based on the different yield performance over the whole field.

According to a second aspect of the present disclosure, determining the at least one measurement region based on the yield data further comprises determining at least one area within the agricultural field wherein the area's yield is comprised within a predetermined yield range and determining the at least one measurement region within the at least one determined area within the predetermined yield range.

Following this approach, specific measurement regions can be determined to address the needs of the areas with similar yields.

According to a third aspect of the present disclosure, determining the at least one measurement region based on the yield data further comprises determining a plurality of areas within the agricultural field wherein the yield of each of the plurality of areas is comprised within a predetermined yield range and determining at least one measurement region within each of the plurality of determined areas within the predetermined yield range.

Following this approach, specific measurement regions can be determined which highlight the differences in the crop amongst the different yield areas.

According to a fourth aspect of the present disclosure, the method further comprises receiving at least one crop nutrient content measured by the crop nutrient measurement device in the determined at least one measurement region and the method further comprises determining a fertilizer recommendation based on the at least one crop nutrient content.

Following this approach, a relevant and representative crop nutrient content measurement is achieved.

According to a further aspect of the present disclosure, determining the at least one measurement region further comprises determining at least a first measurement region and at least a second measurement region.

Following this approach, in-field variabilities within the specific yield areas can be addressed.

According to a further aspect of the present disclosure, determining at least a first measurement region and at least a second measurement regions further comprises receiving remote spectral data from at least a plurality of wavelengths of the agricultural field; processing the remote spectral data to determine at least one coefficient indicative of a crop status; determining at least one first measurement region and at least one second measurement region within the determined area further based on the at least one coefficient or a combination thereof, wherein the at least one first measurement region is selected such that the at least one coefficient in the at least one first measurement region is within a first predetermined threshold from a first predetermined value of the coefficient in the determined area; and wherein the at least one second measurement region is selected such that the at least one coefficient in the at least one second measurement region is within a second predetermined threshold from a second predetermined value of the coefficient in the determined area.

Following this approach, areas with specific nutrient contents can be used as reference for improving the fertilizer recommendation.

According to a further aspect of the present disclosure, receiving position dependent yield data comprises receiving remote data comprising remote spectral data of the at least one agricultural field from the at least one prior crop season; generating at least one vegetation index indicative of the crop nutrition status for the at least one prior crop season over a predefined time; processing the at least one vegetation index over the predefined time; determining a position dependent yield for the at least one prior crop season based on the generated and processed vegetation index over the predefined time.

Following this approach, yield data can be obtained remotely eliminating herewith the need of machinery to generate the position dependent yield data.

According to a further aspect of the present disclosure, the method further comprises receiving at least a first crop nutrient content and at least a second crop nutrient content from the at least one first and at least one second measurement regions and the method further comprises determining a fertilizer recommendation based on the at least one first and at least one second crop nutrient content.

Following this approach, measurements can be carried on crops eliminating the need of crop related calibration.

According to a further aspect of the present disclosure, the fertilizer recommendation is determined based on the ratio of the first crop nutrient content and the second crop nutrient content.

According to a further aspect of the present disclosure, the fertilization recommendation is further adjusted based on the absolute value of the first or the second crop nutrient content.

According to a further aspect of the present disclosure, the method further comprises carrying out the fertilizer recommendation by means of any suitable agricultural machinery.

According to a further aspect of the present disclosure, the system comprises a display and an input unit, wherein the system further comprises a graphical user interface, GUI, configured to display a plurality of measurement regions, wherein the graphical user interface is further configured to receive an input for selecting one from the at least one of the plurality of measurement regions displayed.

According to further aspects, a system, a data processing apparatus, a computer-readable storage medium, and a computer program product configured to carry out the above discussed methods are envisaged within the present disclosure.

Brief description of the figures

The accompanying drawings, which are included to provide a further understanding of the present disclosure and are incorporated in and constitute a part of this specification, illustrate embodiments of the disclosure and together with the description serve to explain the principles of the disclosure.

Figure 1 shows a system according to an embodiment of the present disclosure.

Figures 2a and 2b show an exemplary use according to different embodiments of the system of the present disclosure.

Figure 3a shows a representation of the value of a coefficient indicative of a crop nutrient status over the agricultural field.

Figure 3b shows a representation of an example of the different yield areas in an agricultural field.

Figures 4a-b show different embodiments of the Graphical User Interface according to different embodiments of the present disclosure.

Figures 5a-d show different embodiments of the Graphical User Interface according to further embodiments of the present disclosure.

Figure 6 shows a workflow of an embodiment of the present disclosure.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

**Detailed Description**

As used below in this text, the singular forms "a", "an", "the" include both the singular and the plural, unless the context clearly indicates otherwise. The terms "comprise", "comprises" as used below are synonymous with "including", "include" or "contain", "contains" and are inclusive or open and do not exclude additional unmentioned parts, elements or method steps. Where this description refers to a product or process which "comprises" specific features, parts or steps, this refers to the possibility that other features, parts or steps may also be present, but may also refer to embodiments which only contain the listed features, parts or steps.

The enumeration of numeric values by means of ranges of figures comprises all values and fractions in these ranges, as well as the cited end points. The term "approximately" as used when referring to a measurable value, such as a parameter, an amount, a time period, and the like, is intended to include variations of +/- 10% or less, preferably +/-5% or less, more preferably +/-1% or less, and still more preferably +/-0.1% or less, of and from the specified value, in so far as the variations apply to the disclosure disclosed herein. It should be understood that the value to which the term "approximately" refers per se has also been disclosed.

Unless defined otherwise, all terms present in the current disclosure, including technical and scientific terms, have the meaning which a person skilled in the art usually gives them. For further guidance, definitions are included to further explain terms which are used in the description of the disclosure.

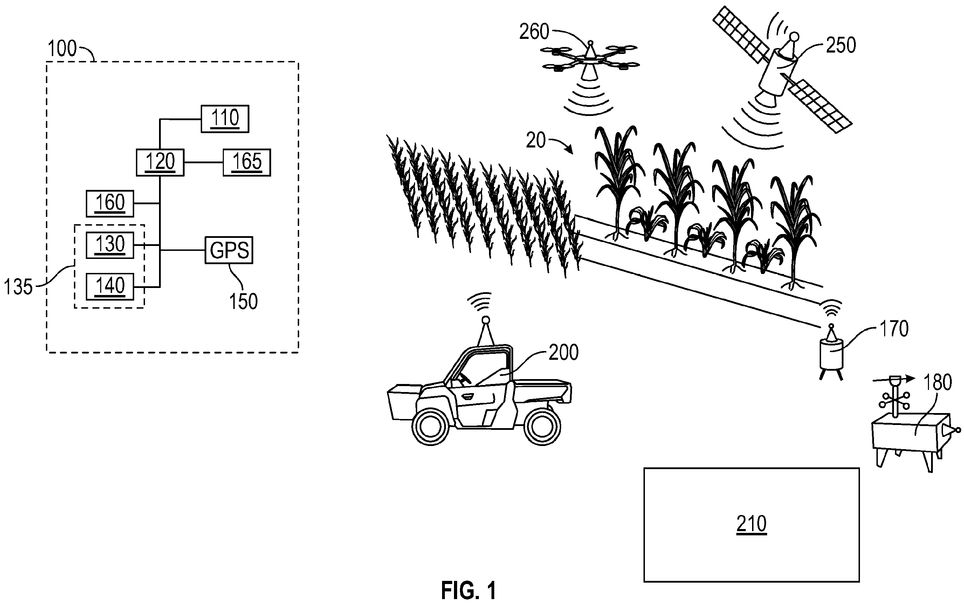

In Fig. 1, a schematic representation of an example of a system according to the present disclosure is represented. Figure 1 depicts an agricultural field comprising at least one crop within an agricultural region with other systems and apparatus with which the system 100 may interoperate. A system 100 according to the present disclosure comprises a crop nutrient measurement device 110 and a communication unit 120.

Crop nutrient measurement devices as the ones discussed in the prior art above present different constructional arrangements. Some embodiments of these devices comprise an own communication unit 120 or are operably connected to a mobile communication device like a laptop, smartphone or tablet or other mobile electronic device which functions as communication unit, as pointed in the prior art. In other embodiments, the devices are peripherals attached to the mobile communication device, using a camera of the mobile communication device as optical detection unit, basing respectively the determination of the crop nutrient content on the reflectivity or transmissivity of the leaves at specific wavelengths. Multi-nutrient sensors are described in the prior art and are as well covered within the scope of the current disclosure. However, no specific determination of the detection principle, unless otherwise stated, is intended for the goal of the current disclosure, since the specificities of the detecting principle nor the constructional arrangement of the system are not intrinsically related to the advantages provided by the current disclosure.

Communication unit 120 may therefore be an integral or dedicated unit integrated with the crop nutrient measurement device 110 or a separate electronic communications device operably connected to the crop nutrient measurement device 110. In a further embodiment, system 100 may be a handheld mobile device. Different examples of these embodiments would be represented by already existing devices, wherein a difference has to be made between, nitrogen or chlorophyl detection devices, like the N-Tester BT®, the N-Tester Clip® and Yaralrix®, and other multi-nutrient sensing devices like the Z-903 LIBS analyzer of Sciaps®, which are incorporated herein by reference.

While the N-Tester BT® and the N-Tester Clip® are based on the change of light intensities in certain wavelengths upon light transmission through a plant leaf, Yaralrix® is based on ground-based photographs of plant canopies taking into account sun's light reflectivity by capturing images with a camera unit of the mobile electronic device. However, other type of devices which determine a crop nutrient content, based on for example Laser-induced breakdown spectroscopy of analyzed samples, as mentioned above, are as well included in the scope of the current disclosure.

System 100 comprises several components such as a processor 160, a wireless communication unit 120, a location determining or GPS unit 150 or equivalent (Glonass, Beidou, Galileo...), a memory unit 165. System 100 may further comprise a display 130 and an input unit 140, which might be combined as a touch sensitive screen 135. System 100 is however not limited by these components and may further comprise other elements as customary within the standard practice.

System 100 may further comprise an agricultural recommendation engine 210 to which the system may be remotely connected by means of the communication unit. System 100 and/or Agricultural recommendation engine 210 may be represented by a single device or a distributed series of devices intercommunicated. As such, each can be represented by computer, a remotely accessible server, other client-server architectures or any other electronic devices usually encompassed under the term data processing apparatus. As such, all steps within the method of the current disclosure may be carried out (partly) separately or jointly in any of the processing units of system 100 or agricultural recommendation ending 210.

Agricultural recommendation engine 210 may comprise field, farm data and external data, whereby external data comprises weather data and further data provided by weather forecast providers or other third parties. Field data may comprise amongst others, field and geographic identifiers regarding the geometry of the boundaries of the agricultural field, including the presence of areas within the agricultural field which are not managed, topographic data, crop identifiers (crop variety and type, growth status, planting data and date, plant nutrition and health status), harvest data (yield, value, product quality, estimated or recorded historic values), soil data (type, pH, soil organic matter, SOM, and/or cation exchange capacity, CEC) as well as historic series of the data. Farm data may comprise further data regarding to planned and past tasks like field maintenance practices and agricultural practices, fertilizer application data, pesticide application data, irrigation data and other field reports as well as historic series of the data, allowing the comparison of the data with past data, and further administrative data like work shifts, logs and other organizational data. Planned and past tasks may comprise activities like surveillance of plants and pests, application of pesticides, fungicides or crop nutrition products, measurements of at least one farm or field parameter, maintenance and repair of ground hardware and other similar activities.

The agricultural recommendation engine 210 may be configured to retrieve soil data from available online soil databases like SoilGrids from the World Soil Information, SSURGO (Soil Survey Geographic Database from the United States Department of Agriculture) or any similar soil data repository.

System 100 may be further configured to receive any of the above-mentioned data and further field data from a predetermined number of locations within or nearby the analyzed region, inputted manually by the users/farmers by means of the input unit 140 or received by the communication unit 120 from dedicated sensors 170. Further, system 100 and agricultural recommendation engine 210 may be configured to receive weather data from nearby weather stations 180 and/or external crop/farm sensors 170, as well as by means of the input unit 140. Nearby weather stations 180 and/or external crop/farm sensors 170 are configured to communicate via one or more networks. In another embodiment, weather data is provided by external weather forecast companies. Weather data may further include present and past temperatures, accumulated precipitation, relative humidity, wind speed, solar radiance, accumulated sun hours, etc.

System 100 may further be operatively connected to an agricultural apparatus 200. Examples of agricultural apparatus 200 include tractors, combines, harvesters, planters, trucks, fertilizer equipment, and any other item of physical machinery or hardware, typically mobile machinery, and which may be used in tasks associated with agriculture. In one embodiment, system 100 may be configured to communicate with the agricultural apparatus 200 by means of wireless networks in order to carry out a fertilizer application. System 100 may be further configured to produce a downloadable script file for the agricultural apparatus to carry out the fertilizer application on uniform or variable rates across the field.

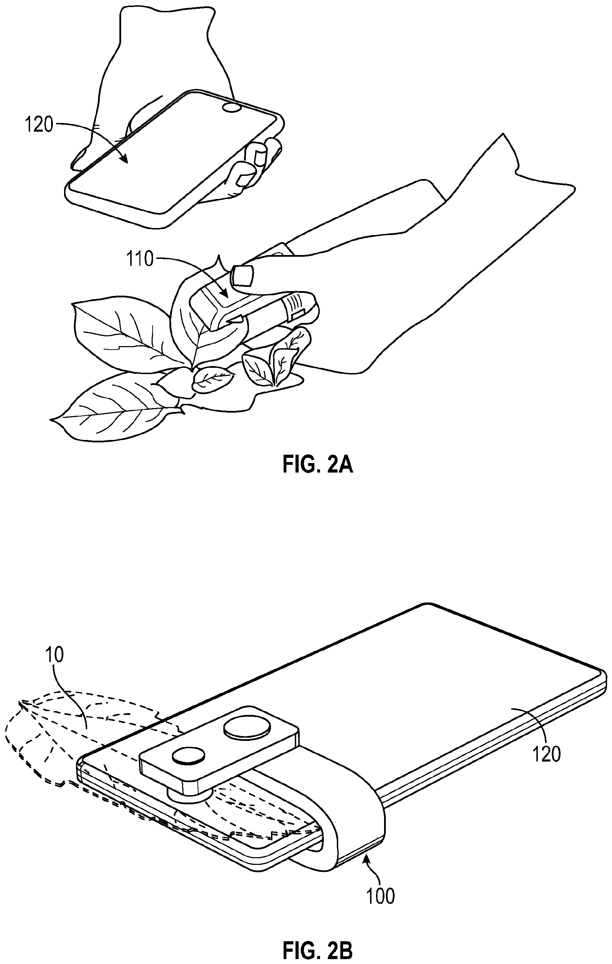

Figures 2a-b show an exemplary use according to different embodiments of the system of the present disclosure. Figure 2a shows an embodiment of the current disclosure where the communication unit 120 and the crop nutrient measurement device 110 are different elements. Crop nutrient measurement device 110 may be operatively connected to the communication unit by means of a suitable wired or wireless connection. Figure 2b shows a further embodiment of the current disclosure where the system is formed by a mobile phone and a peripheral element operatively connected to the mobile phone enables the mobile phone to determine the crop nutrient level based on the transmissivity of light through the plant leave 10 situated in between. The farmers, when in a field, are able of determining the plant nutrient content by directly analyzing one or more leaves 10 of a plant present in the agricultural field. These embodiments do not preclude however other constructional arrangements in which the crop nutrient measurement device 110 and the communication unit 120 may be integrally formed in a single device.

The farmers, when directly measuring the plant nutrient content by means of the crop nutrient measurement device, can rely on their knowledge to determine plants which show a healthy status (no discolored leaves or abnormally looking plant). Usually, farmers might take a plurality of measurements within an area, hoping to collect enough measurements which can be representative of the crop nutrient content within the agricultural field. However, in spite of the best intentions and knowledge of the farmers, they cannot be aware of the variability across the agricultural field due to in-field variabilities across the field of several parameters (some of which are hidden underlying factors like soil properties and subsoil water conditions among others which however have a direct effect to the crop development and final yield) and can therefore unwillingly collect a crop nutrient content based on these measurements which are not representative of the crop nutrient content for the whole crop in the agricultural field or in other cases the derived fertilizer recommendation will not be efficiently used since no consideration of position dependent yield data is taken into consideration. While it is feasible to take enough measurements to cover the whole agricultural field, it would require an enormous amount of work from the farmers. As such, while non-destructive direct measurements can be very accurate in a very local and restricted way, there is a need to improve the accuracy and the nutrient use efficiency of a fertilizer recommendations for the crop across the whole agricultural field reducing the amount of work the farmers are required to put in.

The use of position dependent yield data for characterizing management zones in agriculture has been made available lately thanks to the widespread use of combine harvesters which are configured to measure the amount of crop yield per hectare, allowing the generation of position dependent yield maps. These yield maps can be stored after each season, generating time evolutions of the amount of crop yield per hectare and may be available to the farmers by known means in the current practice. However, not every farmer owns or has access to said combine harvesters and within an embodiment of the current disclosure the determination of said position dependent yield data may be carried out by means of remote sensing.

The current disclosure aims at determining at least one measurement region for carrying out at least one measurement with a crop nutrient measurement device in said measurement region for providing a fertilizer recommendation to a crop, comprising the steps of determining an agricultural field or a part thereof, wherein the agricultural field comprises the crop for which the recommendation is intended; receiving position dependent yield data of the agricultural field, wherein the position dependent yield data comprises yield data from at least on prior crop season, and determining the at least one measurement region based on the position dependent yield data.

While the system has been fully disclosed of a mobile or handheld nature, the method may not be all carried out in a single device. For example, the farmers, at the start of their days, when planning the tasks and activities to be carried out on the agricultural field, either at home or at the farm's office, by means of a mobile or a stationary electronic device like a desktop computer, may determine the needed measurement region(s) where it would be of advantage to carry out the measurements to then upload to the mobile device the corresponding coordinates of the measurement regions, or may as well request a remote server to carry out the determination, wherein the measurement regions can be sent to the system 100 of the current disclosure by means of the communication unit 120 for the farmers to direct themselves with their mobile crop nutrient measurement device 110.

According to the main embodiment of the current disclosure, the computer-implemented method for determining at least one measurement region for carrying out at least one measurement with a crop nutrient measurement device in said measurement region for providing a fertilizer recommendation to a crop, comprises the steps of determining an agricultural field 1000 or a part thereof, wherein the agricultural field comprises the crop for which the recommendation is intended, receiving position dependent yield data of the agricultural field 1100, wherein the position dependent yield data comprises yield data from at least one prior crop season and determining the at least one measurement region based on the position dependent yield data 1400.

According to the current disclosure, the farmers may determine an agricultural field or a part thereof on system 100 by means of the input unit 140 or the system may determine it automatically based on the position of the system 100, as given by the location unit 150. Once the field has been identified, the system may receive position dependent yield data of the agricultural field according to one of the different embodiments disclosed below. The method of the current disclosure then determines the at least one measurement region based on the position dependent yield data.

Following this embodiment, the farmers are able of determining specific crop nutrient status at locations with specific yields. Herewith, the farmers may not only be able to provide a crop nutrient status but as input for the fertilization recommendation, but as well an amount of expected yield based on the prior crop seasons, increasing the nitrogen use efficiency since the fertilizer will be adapted to the nutrient status of the field and as well to the productivity of the specific area.

In one embodiment, determining the at least one measurement region based on the position dependent yield data further comprises determining at least one area 1200 within the agricultural field wherein the area's yield is comprised within a predetermined yield range and determining the at least one measurement region within the at least one determined area within the predetermined yield range. For example, a predetermined yield range defining an area may be set to yield ranges around the average yield of the field per area. For example, the average yield areas may be defined as those areas wherein the position dependent yield is comprised between 75% and 125% of the yield average value of the field. More specifically, the average yield areas may be defined as those areas wherein the position dependent yield is comprised between 85% and 115% of the yield average value of the field. More specifically, the average yield areas may be comprised between 90% and 110% of the yield average value of the field. More specifically, the average yield areas may be comprised between 95% and 105% of the yield average value of the field (e.g., in tonnes per hectare). Analogously, over-producing and under-producing areas can be defined as those areas wherein the position yield are, respectively, greater than 125% or smaller than 75% of the yield average value of the field. More specifically, greater than 115% or smaller than 85%. More specifically, greater than 110% or smaller than 90%. It is of course comprised within the teaching of the current disclosure determining a plurality of yield areas wherein the yield values are comprised within finer specific ranges, based on the homogeneity of the field. Based on specific in-field yield variations, these yield areas may be defined accordingly to suit best the specific yield distribution of the analyzed field.

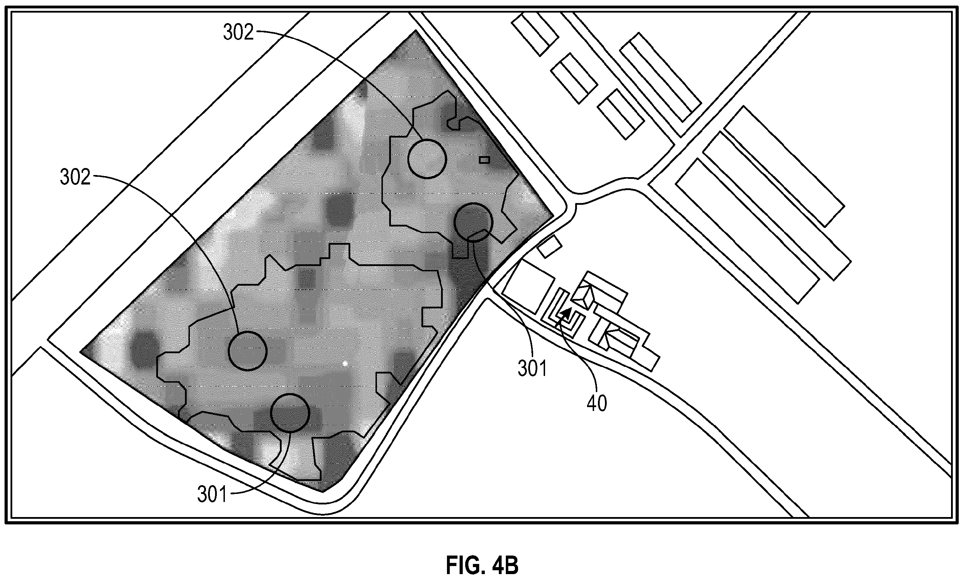

According to a further embodiment, determining the at least one measurement region based on the yield data further comprises determining a plurality of areas within the agricultural field wherein the yield of each of the plurality of areas is comprised within a predetermined yield range and determining at least one first and at least one second measurement region within at least one of the plurality of determined areas within the predetermined yield range. Such an approach can be seen in figure 4b, wherein a first and second yield areas are displayed. First yield area may be an average yield area as defined above and second yield area an underperforming yield area, although the current embodiment is not limited to said areas. As it can be seen, at least one first measurement region 301 is defined in each of the first and second yield areas as displayed in Figure 4b and at least one second measurement region 302 is defined in each of the first and second yield areas. Following this approach, not only the in-field variability within the agricultural field can be determined, but as well within the different yield areas.

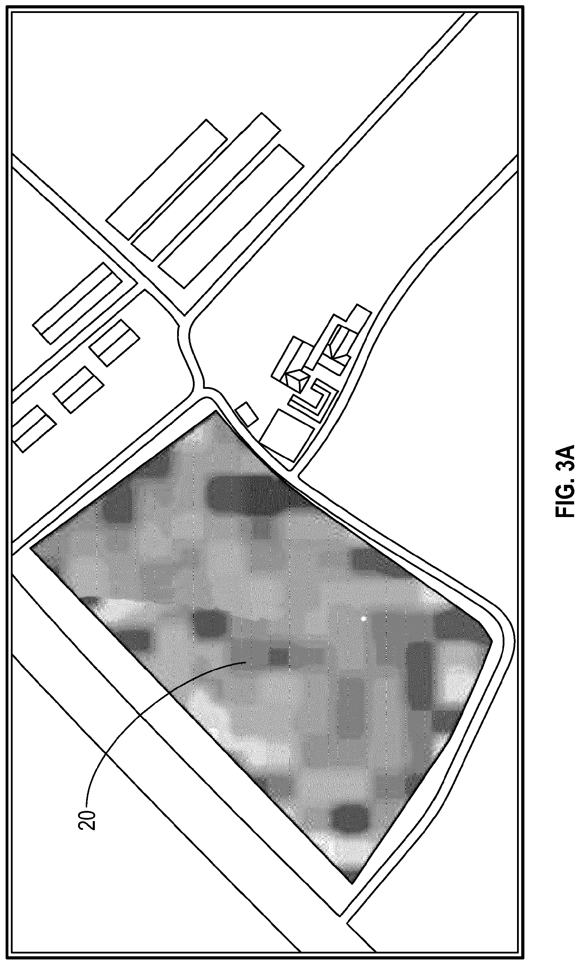

Figure 3a shows a representation of an agricultural field 20 displayed in a Graphical User Interface according to an embodiment of the current disclosure, wherein the inside of agricultural field 20 depicts the different values, in a greyscale, of a coefficient indicative of a crop status as determined from the remote spectral data. The plurality of coefficients generated from the remote spectral data including at least a plurality of wavelengths, i.e., different spectral bands, show the distribution over the agronomic field of different crop nutrient status and herewith the in-field variabilities. While the different tones present in Figure 3a and further figures are intended to be indicative of different crop status, no limitation is intended as to the intrinsic values of the coefficients nor as to the corresponding location of the first and second measurement regions and the representation of the figures is merely orientative. In this embodiment, receiving remote spectral data refers to present images of the agricultural field, although due to the different availability of the satellite images may as well refer to images a couple of days old. However, other approaches which allow the obtention of present crop nutrient status by means of older images and updating these values by means of modeling or machine learning are as well included within the current disclosure.

The present application makes use of suitable remote data for determining the in-field variability of the crop nutrient content. Remote spectral data can be referred to data provided by imaging satellites 250 or suitable manned or unmanned imaging aerial vehicles 260. These satellite or vehicle systems are configured to communicate by means of dedicated networks and usual methods which do not need being disclosed herein. Amongst the different remote data available for use, satellite data is nowadays widely available from numerous public (LANDSAT from NASA, SENTINEL from ESA) and/or private providers. The present method is however not limited to a satellite data platform, since the spectral bands which can be of use for the present method are provided in a big range of the standard satellite data. Due to the differences present across different satellite and optical sensor platforms, it is hereby not intended to limit the support of the current disclosure to exact and specific wavelengths and the given wavelengths are provided for orientation. While different factors and corrections can be introduced to account for these variabilities, the use of wavelengths proximate to the ones mentioned below should be understood since the specifications of said platforms vary accordingly. Moreover, although referred to as remote spectral data, any imaging device able of capturing images at different wavelengths can be used within the current disclosure, including manned or unmanned aerial vehicles 260 equipped with camera devices configured to scan the greater part of the agricultural field.

While the advantages of using remote sensing due to the wide availability of the data are clear, the method of the current disclosure may as well make use of crop nutrition status maps as generated by any means available, for example, by means of tractors having generated these maps in previous runs, may there be available to the farmers.

In an embodiment, remote spectral data is obtained from the Sentinel-2 satellite. The Sentinel-2 mission contains a MSI (Multi Spectral Instrument) that takes high spatial resolution data in order to monitor Earth's surface. The MSI works passively, by collecting sunlight reflected from the Earth and is therefore a more efficient and less energy consuming detection method. Sentinel-2 consists of 13 bands with different spatial resolutions (10m, 20m or 60m pixel), in the visible, near infrared, and short-wave infrared part of the spectrum. In an embodiment, the current method uses the image data related to spectral bands with at least a plurality of wavelengths comprised approximately between 700 and 850 nm. In a further embodiment, the present method uses data related to spectral bands with a wavelength of approximately 740 and 780 nm. The use of Sentinel-2 spectral bands from the MSI produces measurements with a high resolution (approx. 20 m) and is therefore preferred for the implementation of the current disclosure. However, Sentinel-2 data is not available on cloudy days. In this sense, although less precise, the current disclosure may comprise the use of remote data from Sentinel-1 or other active SAR satellites which can be used in cloudy days. However, the current disclosure offers the further advantage that in order to achieve an accurate nitrogen recommendation, there is no need for having a very recent image. In-field variability usually remains constant or has slower dynamics, provided the absence of locally limited pests or other events.

In an embodiment, remote data comprises data relating to different spectral bands are used for improving the determination of the present method. Further compensation and calibration algorithms are considered within the present application, depending on the nature and origin of the remote data. In one embodiment, remote data is preprocessed for cloud and haze removal and light calibration, which is of advantage may the remote data be provided by means of a satellite as described above. In another embodiment, when the remote data is provided by a manned or unmanned aerial vehicle or drone, cloud correction is not needed, but different light compensation procedures are envisaged to compensate for the sunlight characteristics and sun relative position.

Once the remote data has been received, wherein the remote data comprises imagery data from at least a determined location comprising a plurality of spectral bands or optical domains of different wavelengths, the system is configured to generate at least one coefficient derived from the remote data. Different coefficients (or indexes) have been used in the literature for obtaining different agricultural, soil and vegetation information like the difference vegetation index and the normalized difference vegetation index (NDVI). However, NDVI is sensitive to the effects of soil brightness, soil color, atmosphere, clouds, cloud shadows, and leaf canopy shadows and requires remote sensing calibration. In that sense, further coefficients contemplated may comprise the Atmospherically Resistant Vegetation Index (ARVI) to reduce the dependence of atmospheric effects; the Soil-Adjusted Vegetation Index (SAVI) or the Type Soil Atmospheric Impedance Vegetation Index (TSARVI) which take into consideration the distinction of vegetation from the different types of soil background. Apart from the standard vegetation indexes comprised in the state of the art, the present application may make use of further indexes which will be described in more detail below.

In order to provide a reliable vegetation index or coefficient which is indicative of the chlorophyll content present in the vegetation, the further indexes of the application may include different wavelengths at the so-called red edge of vegetation between 670 and 800 nm. In further embodiments, in order to provide a reliable vegetation index or coefficient which is indicative of the water content present in the vegetation, the remote data may comprise further wavelengths at or close to water absorption bands, such around 850, 110, 1450 or 1950 nm in order to determine the canopy water content.

Usual vegetation indexes or coefficients used in the field of remote sensing for the determination of agricultural properties, including crop moisture, crop nutrient status and other agricultural properties include the normalized difference vegetation index (NDVI), which may be computed as follows:

$$NDVI = \frac{NIR - RED}{NIR + RED},$$

wherein NIR represents the reflectance value related to the Near Infrared wavelengths, at about a wavelength range of 750-950nm and RED the reflectance measurements acquired in the red visible spectrum, at about a wavelength range of 600-700 nm. Correspondingly the Normalized Difference Water Index (NDWI) can be expressed as:

$$NDWI = \frac{NIR - SWIR}{NIR + SWIR},$$

wherein NIR represents again the Near Infrared Wavelengths, and SWIR the Short-Wave Infrared wavelengths, at wavelengths in a range of 840-2200 nm, always depending on the different satellite platforms.

The method of the current disclosure may as well make use of other indexes like the Leaf Area Index (LAI), defined as follows:

$$LAI = \frac{NIR}{RED + SWIR},$$

wherein NIR and RED represent as above the data relating to the respective wavelengths of near infrared and red bands and SWIR represents the short-wave infrared. Determining the chlorophyll content, directly related to the crop nitrogen content, and the dry fresh biomass given as an indication by the Leaf Area Index, a more accurate determination of the crop nutrient status can be carried out.

The above listed coefficients are merely some of the suitable ones to carry out the method of the current disclosure. However, the list of coefficients (or indexes) is not meant to be limiting. There is a great variance of different coefficients which are as well able of being used by the present method, as mentioned above for computing other properties of agronomical fields (e.g., soil moisture) which although not directly indicative of crop nutrient content, assist the determination of crop nutrient status by improving further insights into other field parameters. Moreover, the current disclosure may comprise using a suitable combination of coefficients for the determination of the location of the measurement regions. A suitable combination of coefficients may be represented by a coefficient formed as a combination of different coefficients to independently assess individual crop status factors or may be represented by the different coefficients which can then be determined according to a multiparameter analysis such that different properties of the agricultural field may be observed simultaneously for the determination of the measurement regions. For example, areas with similar or predetermined soil properties may be determined, amongst which a further specific crop status may be observed in order to determine the different measurement regions. Following this approach, further in-field variabilities can be assessed and factored out from the determination of the measurement regions.

As mentioned above, position dependent yield data may be received from harvest data when available to the farmer. As already mentioned, modern combine harvesters are able of producing the yield maps necessary for the current method. In an embodiment, however, yield data may be obtained from remote data. In this embodiment, receiving yield data may further comprise receiving remote spectral data of the at least one agricultural field from a least one prior crop season, wherein at least one coefficient (or vegetation index) indicative of the crop nutrition status is generated over at least a part of the at least one prior crop season over a predefined time.

In an embodiment, the current method may further comprise receiving field data comprising data about the different crop types and the crop growth start/harvest dates of the at least one prior crop, wherein the method is configured to receive the data by means of user input or by means of the communication unit 120 if the data is already present in the system as farm or field data. In a further embodiment, the method is configured to automatically determine the crop type and the start of season/end of season dates by processing the at least one generated coefficient. The current method may be further configured to automatically identify the crop type based on weather data and remote spectral data. The current method may determine specific times for the crop growth start ($t_1$) and harvesting ($t_2$) times which define a crop season, wherein there can be different crop seasons over a natural year.

The current method may be configured to determine the specific crop growth start and harvesting times of a predetermined crop within an agricultural field by processing the at least one agricultural index generated from the remote data comprising imagery data of the at least one agricultural field from at least one prior crop season. For several crops (wheat, rye, cereals or broad acre crops in general) the start of the seasons is defined by bare soils or just cover crops residues. The values of vegetation indexes are therefore at a minimum at that time. Analogously, around flowering/reproductive phase time can be determined when the vegetation index reach it maximum before dropping again until harvest and going to a minimum by no green vegetation anymore.

Once the season timings are determined, either given manually by the users or automatically, the method of the current disclosure may be further configured to automatically determine the crop type. Based on calibrated crop evolution models and weather data from the at least one prior crop season, the system may be configured to determine the crop type by correlating the evolution of the at least one vegetation index with the models of the different considered crops and the received weather data.

In a further embodiment, the method being configured to determine a position dependent yield of the at least one prior crop season based on the generated vegetation index may further comprise, for each position associated to each of the generated coefficients, i.e. pixel- or gps-locationwise, referring as $SC_{i,j}$ to the value of the position dependent vegetation index associated to a given pixel (i,j) or coordinate within the agricultural field 20, integrating the value of the at least one generated vegetation index over the predefined time, wherein the position dependent yield is the integrated value of the at least one generated vegetation index over the predefined time, calibrated by means of the crop data.

$$Y_{i,j} = C_{crop} * \int_{t_1}^{t_2} SC_{i,j} \, dt$$

As such, the whole yield of an agricultural field can be defined as:

$$Y_{Field} = \sum_{i,j=1}^{n} Y_{i,j} = \sum_{i,j=1}^{n} C_{crop} * \int_{t_1}^{t_2} SC_{i,j} \, dt$$

Wherein $Y_{Field}$ represents the whole yield of the one field, once the yield data for each pixel in the field is added. As explained above, while yield data can be introduced into the method of the current disclosure directly with a position dependent yield based on modern harvesters with GPS and different sensing arrangements, general yield data of a field could be introduced by the user who may only know the total amount of yield obtained from the whole field. As such, following the above-mentioned equations, the total yield of a crop in a given field can as well be processed by the current method. In a further embodiment, the non-position dependent yield data (yield data for the whole field), which might have been provided by the user or present in existing farm data, is combined with remote data to establish the spatial variation of the vegetation index which in turn delivers a position-dependent crop yield value. It is however not needed the absolute yield data for the whole field to have truthful relative representative values of the position dependent yield data, i.e. the productivity of each unit area, which can be effectively compared, albeit in a relative manner, with the yield values of other unit areas.

In a further embodiment, yield data may be determined based on historic weather data and crop data related to the prior crops. For example, based on a given crop type, a daily gross primary production value of a crop, representative of the daily crop growth, may be determined by the following equation:

$$\Delta GPP = C_{RUE} * f_{apar} * C_{PAR} * f_T;$$

Wherein $C_{RUE}$ is a constant representing the radiation use efficiency, which can be defined as a function of a given solar irradiance as received in historic weather data or approximated from a given day of the year and a given latitude, $f_{apar}$ is a fraction of absorbed photosynthetic radiation determined as a function of the existing chlorophyll pigments, $C_{PAR}$ represents the incoming photosynthetic radiation, and $f_T$ represents a temperature efficiency factor which is usually represented with quadratic relation based on the temperature values or average mean temperature for the considered day. $f_{apar}$ may be generated by processing a vegetation index of the agricultural field and in a further embodiment it may be defined as a function of a vegetation index indicative of chlorophyll presence in the crop, wherein for each pixel $f_{apar}$ may be defined as the difference between the vegetation index at that stage and the vegetation index value at times with no crop. While a full consideration of all the factors disclosed can achieve better and more precise results, subsets of the above-mentioned factors can be considered and are therefore not excluded from the current disclosure.

Based on said daily gross primary production value of a crop, the yield of a field may then further be determined as:

$$Y_{Field} = HI * \sum_{t_1}^{t_2} \Delta GPP,$$

wherein HI represents a harvest index and the sum operator carries out the sum of the daily gross primary production value, $\Delta GPP$, over the vegetation period, wherein $t_1$ and $t_2$ may be determined as explained above.

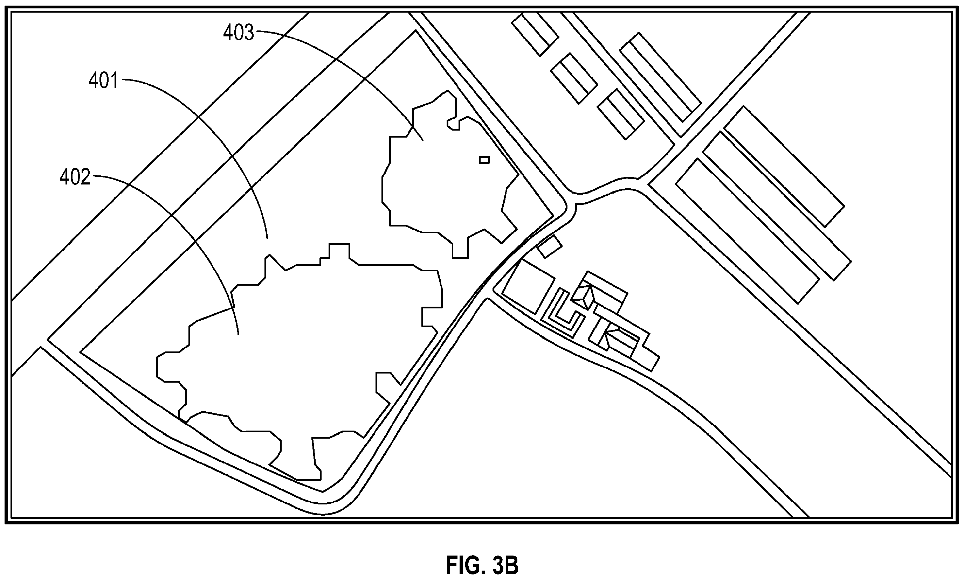

As such, the method of the current disclosure is able of computing said position dependent yield data by means of remote sensing. Independently from the origin of the data, figure 3b shows a representation of the very same agricultural field 20 with different management zones or yield areas (401, 402, 403) computed from the received position dependent yield data. First yield area 401 may be an area wherein the yield values are comprised within the top 30% of yield values across the whole agricultural field, more specifically within the top 20% and particularly within the top 10%, i.e., is an overperforming area. Second yield area 402 may be an area wherein the yield values are comprised between the top and bottom 30% of yield values across the whole agricultural field, more specifically between the top and bottom 20% and particularly between the top and bottom 10%, i.e., is an average or standard area. Third yield area 403 may be an area wherein the yield values are comprised within the bottom 30% of yield values across the whole agricultural field, more specifically within the bottom 20% and particularly within the bottom 10%, i.e., is an underperforming area. The shapes and numbers of yield areas are only depicted here for ease of illustration and does not present any kind of limitation as to the yield areas the current disclosure may encompass. Said yield data may be received from harvest data available to the farmers due to the use of modern machinery or be generated as it will be explained below by means of remote sensing. Once the yield data has been received, the method of the current disclosure comprises determining the yield areas as above by means of the usual arithmetic operations to determine maximum and minimum values and the distribution of said values with said minimum and maximum.

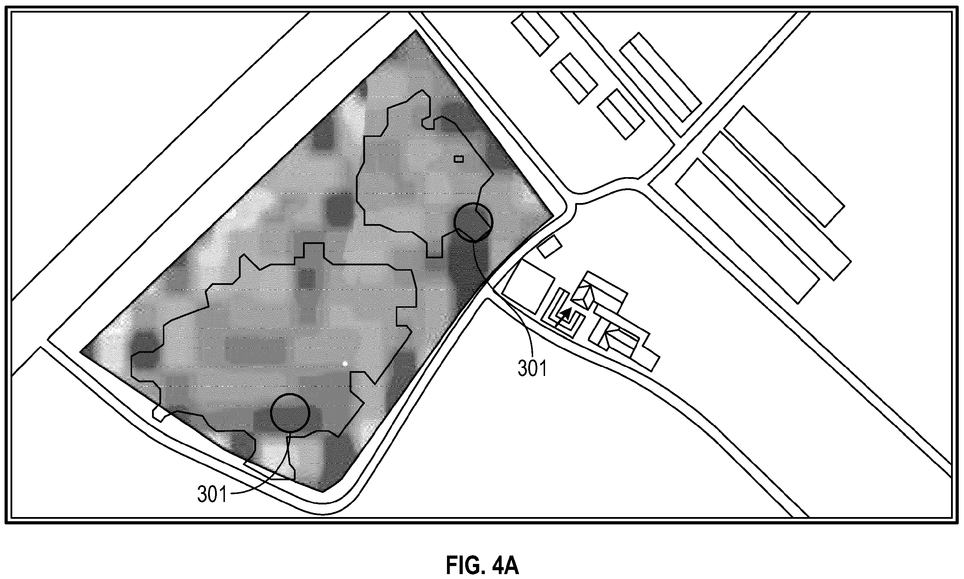

Figure 4a shows an embodiment of remote data representing the values of one of the plurality of coefficients generated from the remote data including at least a plurality of wavelengths as displayed in Figure 3a, showing the distribution over the agronomic field and the in-field variabilities to which the yield areas as seen in Figure 3b have been superposed. As it is to be seen, the plurality of yield areas comprises different values of said one coefficient indicative of the crop nutrient status. As it is depicted in Figure 4a, a first measurement region 301 can be determined within the first yield area 401 and a second first measurement region 301 can be determined within the second and/or, alternatively, third yield area 402. Obtaining crop nutrient measurements from random locations within the predetermined yield areas already helps the farmers determine in-field nutrient variability and the comparison of nitrogen and other nutrient levels at the two different yield areas help the farmers evaluating the in-field variability within the agricultural field and the different parameters causing it. In another embodiment, the method may comprise determining the at least one first and/or at least one second measurement region within a predetermined location.

In one further embodiment, farmers might have selected specific areas within the field for overfertilization in order to estimate the growth in the case of no nutrient deficiency, which might be chosen as first measurement region.

While the different tones present in Figure 3a and 4a and further figures is intended to be indicative of different crop status, no limitation is intended as to the corresponding location of the first and second measurement regions and the representation of the figures is merely orientative.

In a further embodiment, the method of the current disclosure further comprises receiving remote spectral data from at least a plurality of wavelengths of the agricultural field, processing the remote spectral data to determine at least one coefficient indicative of a crop status determining 1300 at least one first and at least one second measurement regions based on the at least one coefficient or a combination thereof, wherein the at least one first measurement region is selected such that the at least one coefficient in the at least one first measurement region is within a first predetermined threshold from a first predetermined value of the coefficient in the agricultural field, wherein the at least one second measurement region is selected (amongst the areas of the determined area wherein) such that the at least one coefficient in the at least one second measurement region is within a second predetermined threshold from a second predetermined value of the coefficient in the agricultural field.

Based on this approach, different combinations of possible yield areas and at least one first and at least one second measurement regions can be effectuated. In an embodiment, defining at least a first and at least a second measurement region comprised determining the areas within the specific yield area wherein the at least one coefficient or combination thereof is within a first predetermined threshold from a first predetermined value of the coefficient (or combination thereof) and determining the at least one second measurement region amongst the areas of the agricultural field wherein the at least one coefficient or combination thereof is within a second predetermined threshold from a second predetermined value of the coefficient (or combination thereof).

In a further embodiment, when specific areas have been determined based on the yield data as mentioned above, the at least one first measurement region is selected such that the at least one coefficient in the at least one first measurement region is within a first predetermined threshold from a first predetermined value of the coefficient in the determined area. Analogously, the at least one second measurement region is selected such that the at least one coefficient in the at least one second measurement region is within a second predetermined threshold from a second predetermined value of the coefficient in the determined area. Following this embodiment, the measurement regions are selected amongst representative regions within the determined areas selected based on the yield data, discarding other regions of the agricultural field which may comprise different values of the coefficients.

In a further embodiment, the first predetermined threshold may define ranges comprised within a 20% of the first predetermined value of the at least one coefficient or combination thereof, more specifically 10%, and more specifically 5% of the first predetermined value of the at least one coefficient or combination thereof.

In a further embodiment, the second predetermined threshold may define ranges comprised within a 20% of the second predetermined value of the at least one coefficient or combination thereof, more specifically 10%, and more specifically 5% of the second predetermined value of the at least one coefficient or combination thereof.

In a further embodiment, the first predetermined value may be a value representative of the maximum value of the at least one coefficient or combination thereof and the second predetermined value may be a value representative of the median, average or any other measure of central tendency of the coefficient or combination thereof. In an embodiment, the maximum value and/or the values representative of the median and average are defined with respect to the values of the coefficient over the whole agricultural field. In another embodiment, the maximum value and/or the values representative of the median and average are defined with respect to the values of the coefficient within each of the determined yield areas respectively.

In a further embodiment, the predetermined values for the at least one coefficient or combination thereof may be determined based on the determined yield area such that the value representative of the maximum value is determined only amongst the values of the at least one coefficient within the determined yield area and not with respect to the whole agricultural field. Analogously, the median or average is computed for values of the at least one coefficient within the determined yield area wherein the measurement regions should be located.

Following this approach, the method of the current disclosure may determine at least one first measurement region, wherein the first measurement regions are located within the areas where the coefficient is within a first predetermined threshold from the maximum value of the coefficient within said yield area. Further, the method may comprise determining at least one second measurement region, wherein the second measurement regions are located within the areas where the coefficient is within a second predetermined threshold from a value representative of the median or average of the coefficient within said yield area. As such, may the yield area used the average yield area, such an approach ensures that the first measurement regions depict areas within the average yield area with no nitrogen deficiency and that the second measurement regions depict an average nitrogen content within the average yield areas of the agricultural field. Hence, by means of such a choice, the room for nitrogen application can be determined accurately.

Following this approach, the method of the current disclosure may as well determine at least a first measurement region 301 and a second measurement region 302 within an underperforming yield area. In this case, the use of a multi-nutrient measurement device can be of further advantage since despite the lack of nitrogen deficiency, said measurement regions within the underperforming yield area may give clear indications as to the deficiency of other nutrients in the plants and therefore being the limiting factor for the crop growth. Through such a targeted determination of the measurement regions, different issues regarding nutrient deficiencies can be ascertained depending on the specific embodiment. Moreover, if the nutrient analysis is unconclusive, the determined regions may as well be selected for further analysis (e.g., soil analysis, ...) which might uncover another of the determining factors limiting growth.

Once the farmers have been presented with the at least one first measurement regions (and, optionally with the at least one second measurement regions), in an embodiment, the farmers may carry out the measurements in the determined regions. As such, in a further embodiment, the method may further comprise receiving at least one crop nutrient content 1300, measured by the crop nutrient measurement device in the determined at least one measurement region, and the method further comprises determining a fertilizer recommendation based on the at least one crop nutrient content. In another corresponding embodiment, the method further comprises receiving at least a first crop nutrient content and at least a second crop nutrient content from the at least one first and at least one second measurement regions and the method further comprises determining a fertilizer recommendation 1400 based on the at least one first and at least one second crop nutrient content.

In a further embodiment, when the at least one first measurement region is chosen amongst the areas within a certain threshold of the maximum value of the coefficient, and the at least one second measurement region is chosen amongst the areas within a threshold of the average or the like values of the coefficient, a fertilizer recommendation may be determined based on the ratio of the first crop nutrient and the second crop nutrient content. For example, based on the first crop nutrient content (CN1) and the second crop nutrient content (CN2), a fertilizer blanket fertilizer application for the whole field may be generated according to the following relation:

$$N_{REC} = C_1 * CN2 / CN1;$$

Wherein $N_{REC}$ represents the amount of fertilizer needed and C1 represents a specific constant. The value is of specific relevant when the ratio CN2/CN1 is below a predetermined value which indicates the room for improvement in the nutrition of the averagely nurtured areas, since this would indicate that the regions with an average value of the coefficients, and those below it, will be benefitted from the fertilizer application. In an embodiment, the predetermined value may be comprised between 0.7 and 1, more specifically between 0.8 and 1, more specifically between 0.9 and 1.

In a further embodiment, the method further comprises adjusting the fertilization recommendation based on the absolute value of the first and/or second crop nutrient content. In view of the absolute values of the first or second crop nutrient crop, the fertilization recommendation may be adjusted in order to tackle a lack of nutrients related to the first or the second measurement regions.

In a further embodiment, the method further comprises adjusting the fertilization recommendation based on the yield value of the area where the at least one first and/or at least one second measurement regions are located.

In a further embodiment, the method further comprises carrying out the fertilizer application excepting at the areas amongst which the first measurement regions have been chosen. When the first measurement regions have been chosen amongst the areas where the first predetermined value may be a value representative of the maximum value of the at least one coefficient or combination thereof, these regions are supposed to have no nutrient stress and therefore have a lesser need of fertilizer.

In a further embodiment, the current method may be configured to produce a machine-readable application prescription map based on the variable fertilizer recommendation to control a fertilizer application system. The current method may be further configured to establish direct communication with an agricultural machinery 200 over standard networks to carry out the fertilizer application in an automatized manner. In a further embodiment, the current method may be configured to produce a downloadable script or file, which can be used for uploading such an application prescription map by physical means to a fertilizer application system.

In a further embodiment, the variable fertilizer recommendation is carried out by means of a fertilizer application system, like a spreader or specially adapted agricultural machinery.

In another embodiment, determining the measurement regions comprises determining the measurement regions based on weather data or weather forecast data. When the farmers have already a planned fertilizer application, weather future conditions have to be considered since rain might affect the application of fertilizers due to leaching, while wind may be considered for spraying applications. Further, the choice of a measurement region can be improved by avoiding areas with a high water stress due to the thinning of the leaves and resulting chlorophyll concentration. Hence, determining at least one of the measurement regions well ahead in time before a series of days with adverse conditions can be planned in such a way that both the moment of the application of the fertilizer is taken into consideration, as well as the moment of carrying out the measurements.

In a further embodiment, combining the two preceding ones, a further advantage can be made apparent. In the current embodiment, when having a limit date for a fertilizer application and weather forecast data, determining the measurement regions may further comprise determining at least one measurement region based on the limit date and the weather forecast data.

System 100 may further comprise a dedicated Graphical User Interface as it is to be seen in Figures 3 to 5 which assists the farmers in choosing the appropriate at least one measurement region. As previously mentioned, the system may be configured to display a plurality of first, and optionally, second measurement regions as determined by the method of the current disclosure to the farmers by means of display unit 130 for the farmers to select by means of input unit 140 the best suitable option.

Although the system 100 is of a mobile nature, the Graphical User Interface may as well be run on a laptop or desktop electronic device at the farm in preparation of the daily activities, wherein it can be communicated with system 100 by means of usual networks to transmit the determined measurement regions and the navigation possibilities. In an embodiment as shown in the Figures, the current system 100 may comprise an input unit 140 and display unit 130 combined as a touch sensitive display 135.

The farmers, when planning to carry out the measurements, may first select at least one field from a plurality of agricultural fields to be inspected. The fields may comprise crops of the same or different type and at least a part of the field may be determined in which the crop for which the fertilizer recommendation is intended is located. System 100 may be configured to display the at least one agricultural field determined. System 100, when displaying the at least one field may further display an icon 40 representative the location of the farmers if in the view. System 100 may further display, when the farmer is not on the displayed view due to scale or to the actual position of the farmer, an icon 40 representative of the relative location of the farmers.

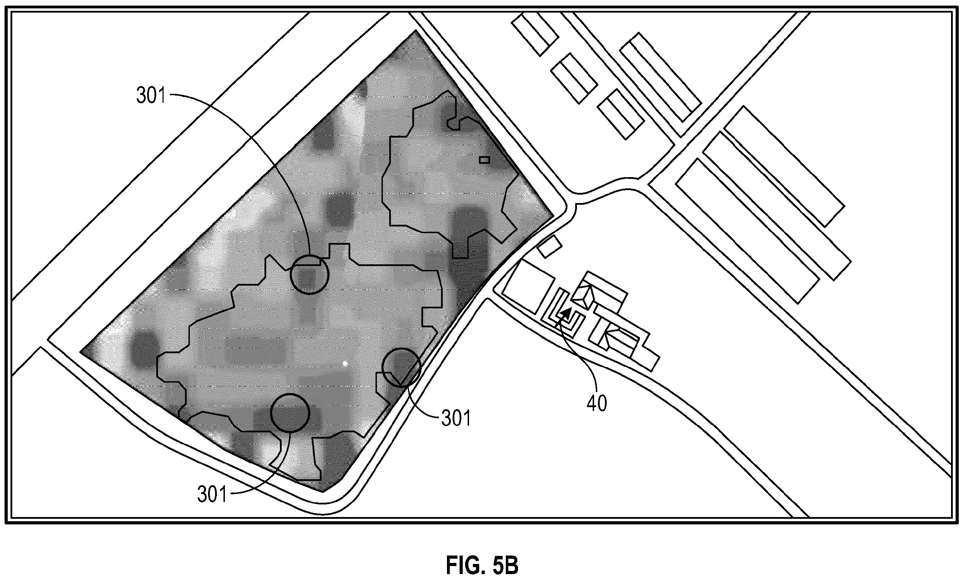

As it is to be seen in Figure 5b, in a further embodiment, system 100 may be further configured to display a plurality of first measurement regions 301 within the agricultural field.

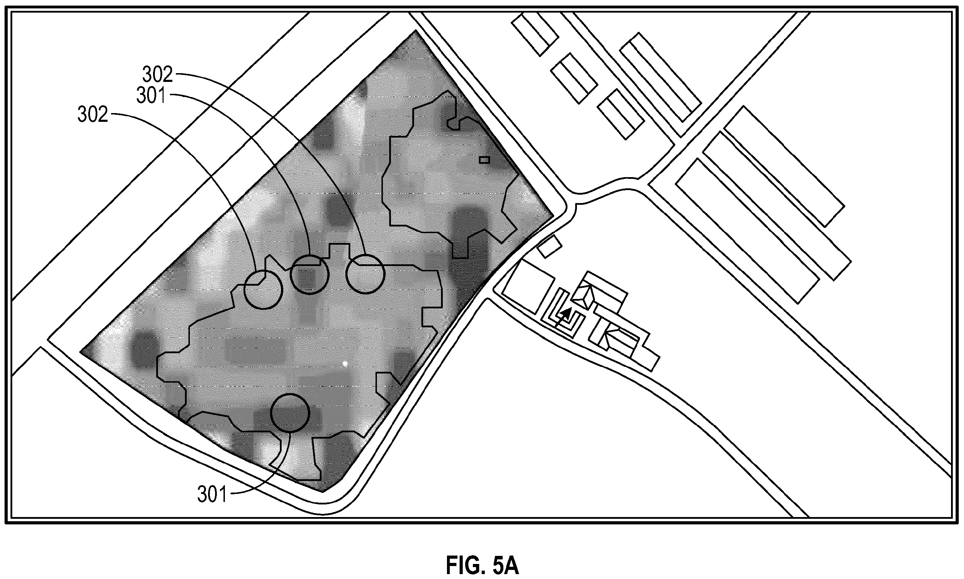

Alternatively, as it is to be seen in Figure 5a, system 100 may be further configured to display a plurality of first and second measurement regions 301, 302 which are suitable for carrying out the measurements, wherein the farmers may select by means of the input unit 140 the most convenient at least one first and at least one second measurement regions.

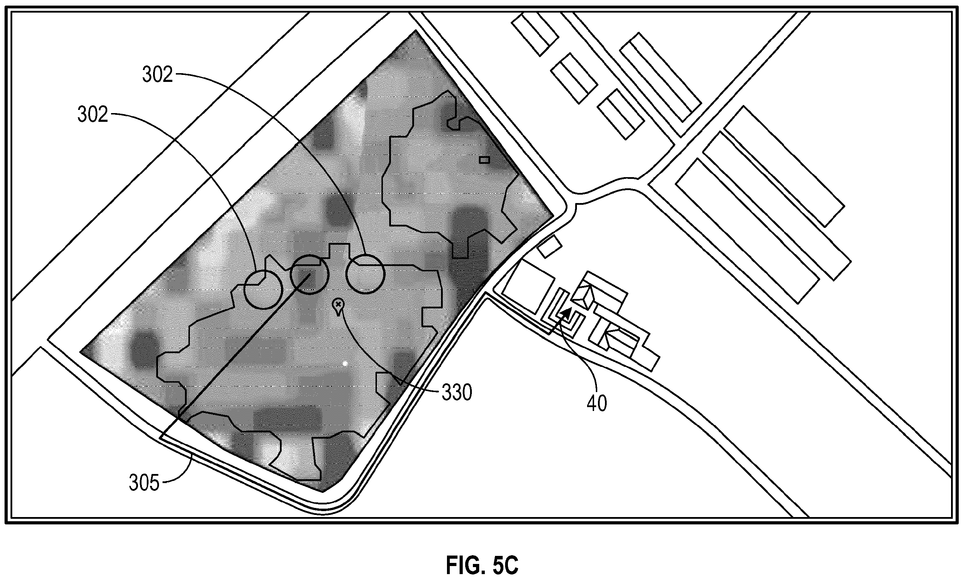

System 100 may be configured to display first a plurality of first measurement regions, as displayed in figure 5b, allowing the farmers to select their preferred first measurement region within the at least one yield areas. In further embodiments, upon selection, system 100 may display a plurality of second measurement regions, as displayed in figure 5c.

Based on the selection of the first measurement region 301, the system may be further configured to show a plurality of second measurement regions 302 which are within a predetermined distance from the first measurement region 301. System 100 may further display scheduled tasks 330 from existing farm data, thereby providing the user with further information for choosing the at least one first and at least one second measurement region to his convenience. Icon for the scheduled tasks 330 may display further information on the task to be carried out like the possible time scheduled, the content of the task or any other note. While the example has been explained here in a predetermined order, it is clear that the order can be reversed without departing from the scope of the present disclosure and the measurement regions processed accordingly, achieving herewith the same advantages, whereby the advantages will be made clear below.

Upon selection of at least a first measurement region, the system may be configured to display a measurement path or itinerary 305, as displayed in Figure 5c, which connects the location of the farmer as displayed by the icon 40, with the at least one first and second measurement regions.

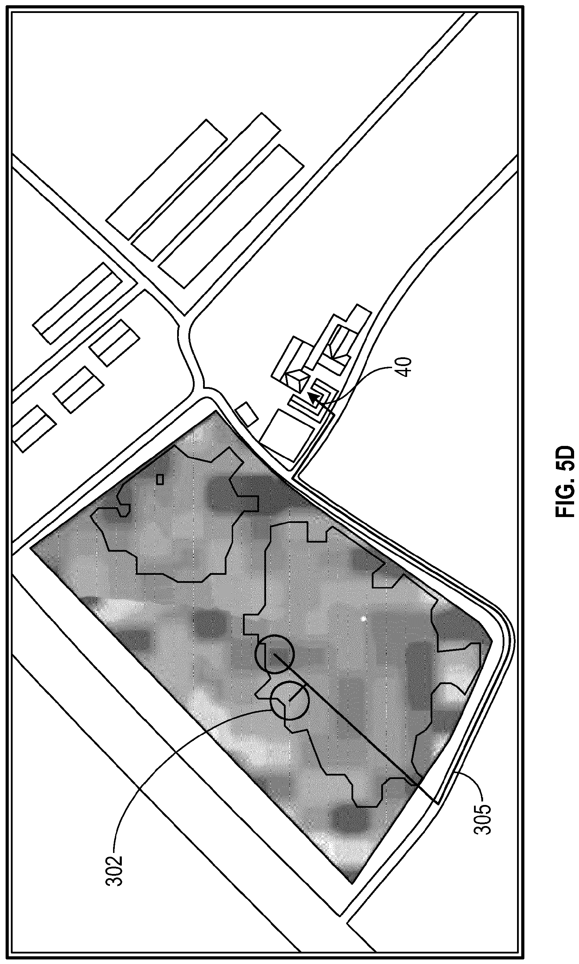

Upon selection of the at least one second measurement regions, the system may be further configured to display the measurement path as well connecting the measurement regions 301 and 302, as it is to be seen in Figure 5d. Optionally, the system of the current disclosure may be configured to include within the measurement path the location of the scheduled task 330, hereby providing a complete itinerary for the farmers to carry out efficiently the different tasks planned or scheduled for the day.

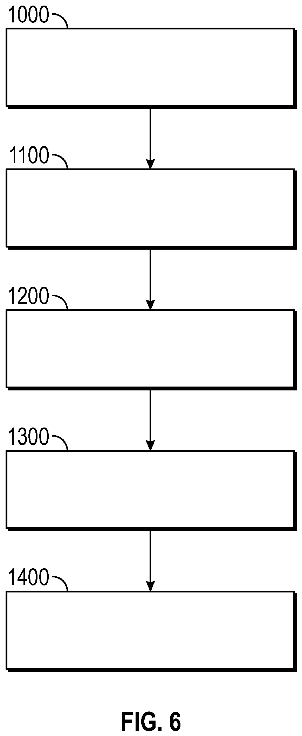

Figure 6 shows an exemplary workflow of a method according to the main embodiment of the current disclosure. Although the process steps, method steps, algorithms or the like may be described in a sequential order or by the use or ordinal numbers, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously, in parallel, or concurrently. Various methods described herein may be practiced by combining one or more machine-readable storage media containing the code according to the present disclosure with appropriate standard computer hardware to execute the code contained therein. An apparatus for practicing various embodiments of the present disclosure may involve one or more computers (or one or more processors within a single computer) and storage systems containing or having network access to computer program(s) coded in accordance with various methods described herein, and the method steps of the disclosure could be accomplished by modules, routines, subroutines, or subparts of a computer program product. While the foregoing describes various embodiments of the disclosure, other and further embodiments of the disclosure may be devised without departing from the basic scope thereof. The scope of the disclosure is determined by the claims that follow. The disclosure is not limited to the described embodiments, versions or examples, which are included to enable a person having ordinary skill in the art to make and use the disclosure when combined with information and knowledge available to the person having ordinary skill in the art.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details, representative apparatus and method, and illustrative example shown and described.

Accordingly, the detailed description thereof should not be construed as restrictive in all aspects but considered as illustrative. The scope of the disclosure should be determined by reasonable interpretation of the appended claims and all changes that come within the equivalent scope are included in the scope of the current disclosure.

List of Reference Signs

| 10 | Plant leaf |
|---|---|
| 20 | Agricultural field |
| 30 | Farmers location |
| 40 | Farmers location icon |
| 100 | System |
| 110 | Crop nutrient measurement device |
| 120 | Communication unit |
| 130 | Display unit |
| 135 | Touch sensitive display |
| 140 | Input unit |
| 150 | Location unit |
| 170 | Crop/Farm sensors |
| 180 | Weather station |
| 200 | Agricultural apparatus |
| 210 | Agricultural recommendation engine |
| 250 | Remote imaging satellite |
| 260 | Manned or unmanned imaging aerial vehicles |
| 301 | First measurement regions |
| 302 | Second measurement regions |
| 305 | Measurement routes or itineraries |
| 330 | Scheduled tasks |
| 350 | Tracks |
| 401 | First management zone or yield area |
| 402 | Second management zone or yield area |
| 403 | Third management zone or yield area |

**Claims**

1. A computer-implemented method for determining at least one measurement region for carrying out at least one measurement with a crop nutrient measurement device in said measurement region for providing a fertilizer recommendation to a crop, comprising the steps of:

   - determining an agricultural field or a part thereof, wherein the agricultural field comprises the crop for which the recommendation is intended;
   - receiving position dependent yield data of the agricultural field, wherein the position dependent yield data comprises yield data from at least one prior crop season;
   - determining the at least one measurement region based on the position dependent yield.

2. A method according to claim 1, wherein determining the at least one measurement region based on the yield data further comprises:

- determining at least one area within the agricultural field wherein the area's yield is comprised within a predetermined yield range;
- determining the at least one measurement region within the at least one determined area within the predetermined yield range.

**3.** A method according to claim 1, wherein determining the at least one measurement region based on the yield data further comprises:

- determining a plurality of areas within the agricultural field wherein the yield of each of the plurality of areas is comprised within a predetermined yield range;
- determining at least one measurement region within each of the plurality of determined areas within the predetermined yield range.

**4.** A method according to any one of claims 1 to 3, wherein the method further comprises receiving at least one crop nutrient content measured by the crop nutrient measurement device in the determined at least one measurement region and the method further comprises determining a fertilizer recommendation based on the at least one crop nutrient content.

**5.** A method according to any one of claims 1 to 3, wherein determining the at least one measurement region further comprises determining at least a first measurement region and at least a second measurement region

**6.** A method according to claim 5 when dependent on claim 2 or 3, wherein determining at least a first measurement region and at least a second measurement region further comprises:

- receiving remote spectral data from at least a plurality of wavelengths of the agricultural field;
- processing the remote spectral data to determine at least one coefficient indicative of a crop status;
- determining at least one first measurement region and at least one second measurement region within the determined area further based on the at least one coefficient or a combination thereof,
- wherein the at least one first measurement region is selected such that the at least one coefficient in the at least one first measurement region is within a first predetermined threshold from a first predetermined value of the coefficient in the determined area;
- wherein the at least one second measurement region is selected such that the at least one coefficient in the at least one second measurement region is within a second predetermined threshold from a second predetermined value of the coefficient in the determined area.

**7.** A method according to any one of claims 1 to 6, wherein receiving position dependent yield data comprises:

i. receiving remote data comprising remote spectral data of the at least one agricultural field from the at least one prior crop season;
ii. generating at least one vegetation index indicative of the crop nutrition status for the at least one prior crop season over a predefined time;
iii. processing the at least one vegetation index over the predefined time;
iv. determining a position dependent yield for the at least one prior crop season based on the generated and processed vegetation index over the predefined time.

**8.** A method according to claim 5 or 6, wherein the method further comprises receiving at least a first crop nutrient content and at least a second crop nutrient content from the at least one first and at least one second measurement regions and the method further comprises determining a fertilizer recommendation based on the at least one first and at least one second crop nutrient content.

**9.** A method according to claim 8, wherein the fertilizer recommendation is determined based on the ratio of the first crop nutrient content and the second crop nutrient content.

**10.** A method according to claim 9, wherein the fertilization recommendation is further adjusted based on the absolute value of the first or the second crop nutrient content.

**11.** A method according to claim 4 or any one of claims 8 to 10, wherein the method further comprises carrying out the fertilizer recommendation by means of any suitable agricultural machinery.

**12.** A system for determining at least one measurement region for carrying out at least one measurement in said measurement region for providing a fertilizer recommendation to a crop, configured to carry out the method according to any one of the claims 1 to 11.

**13.** A system according to claim 12, comprising a display and an input unit, wherein the system further comprises a graphical user interface, GUI, configured to display a plurality of measurement regions, wherein the graphical user interface is further configured to receive an input for selecting one from the at least one of the plurality of measurement regions displayed.

14. A computer-readable storage medium comprising instructions which, when executed by a computer system, cause the computer to carry out the method of any one of the claims 1 to 11.

15. A computer program product comprising instructions which, when the program is executed by a computer system, cause the computer to carry out the method of any one of the claims 1 to 11.

**FIG. 1**

EP 4 338 565 A1

FIG. 2A

FIG. 2B

FIG. 3A

FIG. 3B

FIG. 4A

FIG. 4B

EP 4 338 565 A1

**FIG. 5A**

FIG. 5B

FIG. 5C

**FIG. 5D**

EP 4 338 565 A1

1000

1100

1200

1300

1400

**FIG. 6**

Europäisches
Patentamt

European
Patent Office

Office européen
des brevets

# EUROPEAN SEARCH REPORT

Application Number

EP 22 19 5604

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/122962 A1 (BASF AGRO TRADEMARKS GMBH [DE]) 24 June 2021 (2021-06-24) * pages 12-15; claims 1,16,17; figures 1,4 * ----- | 1-15 | INV. A01C21/00 G06Q50/02 |
| X | CA 2 663 917 C (DYNAGRA CORP [CA]) 30 December 2014 (2014-12-30) * pages 4,8,9; claims 31,42; figures 2,5 * ----- | 1-7,9, 10,12, 14,15 | |
| A | US 2020/045898 A1 (ARRIAZA JUAN LOPEZ [US] ET AL) 13 February 2020 (2020-02-13) * claim 1 * ----- | 4 | |

| | | | TECHNICAL FIELDS SEARCHED (IPC) |
|---|---|---|---|
| | | | A01C G06Q |

The present search report has been drawn up for all claims

| Place of search | Date of completion of the search | Examiner |
|---|---|---|
| The Hague | 6 February 2023 | Weinmüller, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 5604

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2023

| Patent document cited in search report | | | Publication date | Patent family member(s) | | | Publication date |
|---|---|---|---|---|---|---|---|
| WO 2021122962 | A1 | | 24-06-2021 | AR | 120807 | A1 | 16-03-2022 |
| | | | | BR | 112022011881 | A2 | 06-09-2022 |
| | | | | CN | 114828618 | A | 29-07-2022 |
| | | | | EP | 4075941 | A1 | 26-10-2022 |
| | | | | WO | 2021122962 | A1 | 24-06-2021 |
| CA 2663917 | C | | 30-12-2014 | NONE | | | |
| US 2020045898 | A1 | | 13-02-2020 | AR | 115952 | A1 | 17-03-2021 |
| | | | | AU | 2019322623 | A1 | 18-03-2021 |
| | | | | BR | 112021002525 | A2 | 04-05-2021 |
| | | | | CA | 3108712 | A1 | 20-02-2020 |
| | | | | CN | 112889007 | A | 01-06-2021 |
| | | | | EP | 3837589 | A1 | 23-06-2021 |
| | | | | US | 2020045898 | A1 | 13-02-2020 |
| | | | | WO | 2020036705 | A1 | 20-02-2020 |

**REFERENCES CITED IN THE DESCRIPTION**

**Patent documents cited in the description**

- US 7746452 B2
- US 10175215 B2
- US 20070218556 A1